# EUROPÄISCHE PATENTSCHRIFT

(11) **EP 1 422 152 B1**
(45) Veröffentlichungstag und Bekanntmachung des Hinweises auf die Patenterteilung: **01.10.2008**
(21) Anmeldenummer: 02743686.4
(22) Anmeldetag: 21.06.2002
(51) Int. Cl.: B65D 19/32, B65D 19/00

(54) **KUNSTHARZPALETTE**
SYNTHETIC RESIN PALLET
PALETTE DE RESINE SYNTHETIQUE

(30) Priorität: 27.06.2001 JP 2001194638
(43) Veröffentlichungstag der Anmeldung: 26.05.2004
(73) Patentinhaber: Kabushiki Kaisha Meiji Gomu Kasei, Tokyo 160-0023 (JP)
(72) Erfinder: YAGUCHI, Masaru, Honsha Factory, Ashigarakami-gun, Kanagawa 258-0026 (JP); HARA, Noriaki, Honsha Factory, Ashigarakami-gun, Kanagawa 258-0026 (JP); TERANO, Kunihiro, Honsha Factory, Ashigarakami-gun, Kanagawa 258-0026 (JP); SHIOYA, Kei, Honsha Factory, Ashigarakami-gun, Kanagawa 258-0026 (JP)
(74) Vertreter: Neugebauer, Jürgen
(86) Internationale Anmeldenummer: PCT/JP2002/006215
(87) Internationale Veröffentlichungsnummer: WO 2003/002420

(56) Entgegenhaltungen:
- GB-A- 1 428 789
- JP-A- 5 253 934
- JP-A- 9 109 340
- JP-A- 10 316 134
- JP-A- 52 033 977
- JP-A- 2000 203 578
- JP-A- 2001 106 232
- US-A- 5 453 236
- PATENT ABSTRACTS OF JAPAN Bd. 1999, Nr. 03, 31. März 1999 (1999-03-31) & JP 10 316134 A (MEIJI RUBBER & CHEM CO LTD), 2. Dezember 1998 (1998-12-02)

## Beschreibung

### TECHNISCHES GEBIET

Die Erfindung bezieht sich auf eine Kunststoffpalette für einen Gabelstapler, welche verwendet wird zum Lagern und Transportieren einer Last, und insbesondere auf eine Kunststoffpalette, bei der zumindest ein Teil der Palette einen zweilagigen Aufbau aufweist, der aus einer äußeren Schicht und einer inneren Schicht besteht.

### STAND DER TECHNIK

Herkömmlicherweise werden als Paletten zum Lagern und Transportieren einer Last meist Kunststoffpaletten anstelle von Holzpaletten verwendet, da erstere ausgezeichnete Eigenschaften hinsichtlich ihrer Wasserbeständigkeit und Korrosionsbeständigkeit aufweisen. Da eine Kunstoffpalette ein großvolumiger spritzgegossener Artikel ist, üben die Spritzgußbedingungen, wie zum Beispiel Lage und Verlauf der Trennfläche an einer Metallform, der Angießkanal, ein Anguß oder ähnliches einen großen Einfluß auf die Abmessungsgenauigkeit, die Belastbarkeit u.s.w. des Artikels aus, und zwar mehr als sonst bei gewöhnlichen spritzgegossenen Kunststoffartikeln. Da die Kunststoffpalette ein spritzgegossener Artikel mit großen Abmessungen wie zum Beispiel 1000 mm x 1000 mm, 1100 x 1200 mm u.s.w. ist, wird eine Kunststoffpalette im allgemeinen mittels vier oder mehr Angüssen spritzgegossen.

Ein Mehrfachangußsystem mit einer erhöhten Anzahl von Angüssen wird verwendet, um die Fließeigenschaft des Kunststoffs sicherzustellen zum Zeitpunkt des Spritzgießens und um die Produktivität zu erhöhen durch Fertigstellen eines Befüllungsvorgangs und des Verfestigens in einer kurzen Zeitspanne. Weiterhin liegt ein weiterer Grund für die Verwendung eines Mehrfachangußsystems darin begründet, daß im Falle, daß die Palette ein Artikel aus geschäumtem Kunststoff ist, der Unterschied in der Schäumdichte zwischen jeweiligen Bereichen groß wird, und zwar abhängig von einer Längsausdehnung einer Entfernung, in welcher der Kunststoff vom Anguß wegfließt. Dementsprechend wird die Entfernung, über die der Kunststoff fließt, durch Verwendung eines Mehrfachangußsystems verkürzt. Die Verwendung von einem Einpunktangußbereich, wie Z.B. in JP 10316134 kann diese Probleme lösen.

Andererseits haben sich in den letzten Jahren Aktivitäten ergeben zum Recyceln von Kunststoffprodukten zusammen mit einer Erhöhung des Umweltschutzbewußtseins. Kunststoffartikel können verwendet werden, die mehrfach recycelt sind, und recyceltes Kunststoffmaterial wird in einer Vielzahl von Einsatzbereichen verwendet. Da das recycelte Kunststoffmaterial jedoch bereits eingefärbt worden ist, besteht ein Problem darin, daß es schwierig ist, einen bestimmten Typ von recyceltem Kunststoff unabhängig von anderen zu verwenden.

Weiterhin wird bei einer herkömmlichen Kunststoffpalette, um Kosten einzusparen, die Palette geformt durch Wiederverwenden von recyceltem Kunststoff. Herkömmliches recyceltes Kunststoffmaterial wird hergestellt durch Mischen eines bestimmten Anteils von recyceltem Kunstoffmaterial mit Neuware.

Jedoch besteht beim Verwenden von herkömmlichem recyceltem Kunststoffmaterial das nachfolgende Problem.

Es sei angenommen, daß zum Beispiel ein Bierbrauer und ein Hersteller alkoholischer Drinks Paletten verwenden in ihren jeweiligen Hausfarben. Weiterhin trete bei einem Distributionszentrum für Produkte wie zum Beispiel Bier oder ähnlichem die Situation auf, daß die Paletten, welche verschiedene Farben für die jeweiligen Hersteller vorsehen, miteinander vermischt werden. Dementsprechend ist es in einem solchen Distributionszentrum schwierig, den Arbeitsaufwand und Speicherraum zu kalkulieren, der zum Sortieren der Paletten benötigt wird, die von den Herstellern auszusondern sind, zu einem Zeitpunkt, bei dem beschädigte Paletten oder ähnliches aussortiert werden. Somit ist es im Distributionszentrum schwierig, die beschädigten Paletten oder ähnliches effektiv auszusondern.

Weiterhin kann in dem Fall, daß zerbrochene Paletten oder ähnliches ausgesondert werden können ohne Sortieren, der Fall eintreten, daß recyceltes Kunststoffmaterial anfällt, bei dem eine Vielzahl von Farben vermischt sind, und das oben erwähnte recycelte Kunststoffmaterial kann nicht verwendet werden, da sich das recycelte Kunststoffmaterial von den Hausfarben des jeweiligen Herstellers unterscheidet. Um recyceltes Kunststoffmaterial zu verwenden, bei dem eine Vielzahl von Farben gemischt sind, wird es dementsprechend notwendig werden, daß eine große Menge teurer Pigmente hinzugefügt wird, um sich ungefähr der Hausfarbe des Herstellers anzupassen. Weiterhin gilt, daß, selbst wenn eine große Menge an Pigmenten zu dem recycelten Kunststoffmaterial hinzugefügt wird, es nicht nur schwierig ist, die Farbe des spritzgegossenen Artikels an die Hausfarbes anzugleichen, sondern es führt auch dazu, daß diese Vorgehensweise die Kosten erhöht.

Weiterhin werden beim herkömmlichen Spritzgießverfahren, welches ein Mehrfachangußsystem verwendet, dann, wenn sich die Zahl der Angießpunkte erhöht, auch größere Schweißbereiche einstellen. Ein Schweißbereich wird erzeugt aufgrund der Tatsache, daß ein Vorderende einer Fließfront eines verflüssigten Kunststoffs abgekühlt wird und oxidiert wird, und zwar dann, wenn der Fluß des Kunststoffs aufgeteilt wird und sich wieder trifft. Dadurch kann der Kunststoff nicht vollständig miteinander verbunden werden und wird mit Schlieren versehen, oder Luft innerhalb einer Kavität oder ein flüchtiger Bestandteil des Kunststoffs verhindern einen Zusammenfluß. Bei den meisten spritzgegossenen Artikeln tritt eine Schweißnaht auf.

Eine Maßnahme gegen das Auftreten einer Schweißnaht besteht darin, die Fließeigenschaften des Kunststoffs zu verbessern. Um bei einem herkömmlichen spritzgegossenen Artikel mit großen Abmessungen, wie zum Beispiel einer Palette, eine Gegenmaßnahme zu erreichen, wird die Anzahl der Angüsse auf ein Mehrfachangußsystem eingestellt, und die Befüllungsgeschwindigkeit wird groß gemacht. Jedoch kann das Mehrfachangußsystem nicht vollständig verhindern, daß eine Schweißnaht auftritt, und zwar selbst in dem Fall, daß Gegenmaßnahmen bereitgestellt werden, um die Fließeigenschaft des Kunststoffs zu erhöhen.

Die Erfindung wurde ersonnen in Anbetracht der oben erwähnten Umstände, und ein Ziel der vorliegenden Erfindung besteht darin, eine Kunststoffpalette bereitzustellen, welche sich durch hohe Fertigungsproduktivität auszeichnet, formstabil ist und eine gute Oberflächeneigenschaft aufweist.

Weiterhin besteht ein Ziel der vorliegenden Erfindung darin, eine Kunststoffpalette bereitzustellen, die so aufgebaut ist, daß ein recyceltes Kunststoffmaterial nicht auf einer äußeren Schicht (Außenhaut) auftritt, und zwar selbst in dem Fall, daß ein recycelter Kunststoff verwendet wird, der erhalten wird durch Mischen einer Vielzahl von Farben.

### OFFENBARUNG DER ERFINDUNG

Die Erfindung ist wie folgt konzipiert, um die oben erläuterten Ziele zu erreichen. Gemäß der Erfindung wird eine Kunststoffpalette bereitgestellt, die eine Deckplatte und Querstreben enthält, wobei zumindest ein Teil der Palette spritzgegossen ist in einem zweilagigen Aufbau, der aus einer Außenhaut besteht, die eine äußere Schicht bildet, sowie einer Kernschicht, die eine innere Schicht bildet. Die Kunststoffpalette gemäß der vorliegenden Erfindung kann hergestellt werden durch ein Verfahren zum Formen eines mehrlagigen spritzgegossenen Artikels, welches die Schritte umfaßt des Spritzgießens des Kunststoffs der Außenhaut, welche die Außenschicht bildet, in eine Kavität einer Metallform, und daraufhin Spritzgießen des Kunststoffs der Kernschicht, welche die innere Schicht bildet. Die Kernschicht kann so eingestellt werden, daß sie 10 bis 70 Gew.-% des Gesamtgewichts ausmacht.

Weiterhin handelt es sich bei der Kunststoffpalette um eine sogenannte Vierfachpalette, bei der eine obere Deckplatte und eine untere Deckplatte miteinander verbunden sind über Querstreben, und wobei die Querstreben angeordnet sind in vier Eckbereichen, Zwischenbereichen hiervon und einem ungefähr mittigen Bereich. Bevorzugterweise haben die Querstreben einen Hohlaufbau, welcher mit einem Lufteinschluß in einem inneren Bereich hiervon versehen ist, und zumindest eine äußere Wand der Querstrebe und eine Rippe, welche den Eckbereich der Querstrebe und den Eckbereich einer weiteren Querstrebe miteinander verbindet, sind in einer Zweilagenstruktur ausgeformt, welche eine Außenhaut als äußere Schicht und eine Kernschicht als innere Schicht umfaßt.

Bei dem Herstellverfahren ist es zu bevorzugen, daß der Angußbereich ein Einpunktangußsystem verwendet, bei dem ein Einpunktangußbereich ungefähr in einem mittigen Bereich der Deckplatte bereitgestellt wird. Da die Gesamtheit des Kunststoffes ungefähr mit derselben Geschwindigkeit fließt und ein Gas in der Metallform gleichförmig ausgetrieben wird aus der Gesamtheit der Metallform durch Verwendung des Einpunktangußsystems, ist es möglich, zu verhindern, daß eine Schweißnaht auftritt. Weiterhin kann es im Falle des Verwendens eines Einpunktangußsystems zu bevorzugen sein, daß eine kreisförmige Rippe bereitgestellt wird an einer unteren Oberfläche eines ungefähr mittigen Bereichs in einer Deckplatte, welche den Angußbereich aufweist, und daß die Dicke der oberen Platte im Bereich der kreisförmigen Rippe dicker ausgebildet ist als die anderen Bereiche. Der Fluß des Kunststoffs wird gleichförmiger, wenn der äußere Rand des Angußbereichs dick gemacht wird.

Der Aufbau kann so ausgeführt werden, daß die Außenhaut hergestellt wird aus einem Polyolefinkunststoffmaterial, und die Kernschicht ausgebildet wird durch ein Kunststoffmaterial, welches kompatibel ist mit dem Polyolefinkunststoff. Weiterhin kann die Kernschicht hergestellt werden aus einem recycelten Kunststoffmaterial. Es ist möglich, eine Kostensenkung zu erreichen ohne Ändern einer vorgegebenen Farbe durch Verwenden von recyceltem Kunststoffmaterial für die Kernschicht. Polyolefinkunststoff kann als recyceltes Kunststoffmaterial verwendet werden.

Weiterhin ist es zu bevorzugen, daß die Kernschicht hergestellt wird aus einem Polyolefinkunststoffmaterial mit einem Elastizitätsbiegemodul mit einem Wert zwischen 1000 MPa und 5000 MPa. Es ist möglich, eine preiswerte Palette herzustellen mit geringem Gewicht und einer großen Biegefestigkeit unter Verwendung des oben erläuterten Materials. Es ist möglich, die Außenhaut sowie die Kernschicht durch geeignetes Kombinieren der Materialien zu formen. Zum Beispiel ist es möglich, die Außenhaut auszubilden aus einem nicht geschäumten Kunststoffmaterial und die Kernschicht aus einem geschäumten Kunststoffmaterial auszubilden, welches in geschäumtem Zustand eine Volumenvergrößerung zwichen 1,05 und 1,5 erfährt, oder es ist möglich, die Außenhaut durch ein Kunststoffmaterial auszubilden, welches leitfähig ist. Weiterhin kann die Außenhaut hergestellt sein aus einem Kunststoffmaterial mit einer Leitfähigkeit und Witterungsbeständigkeit, und die Kernschicht kann hergestellt sein aus einem Kunststoffmaterial, welches nicht leitfähig ist und keine Witterungsbeständigkeit zeigt.

### FIGURENBESCHREIBUNG

Es zeigen:

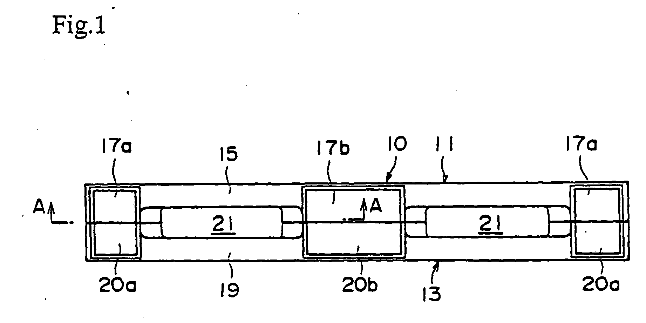

- Fig. 1: eine Vorderansicht einer Ausführungsform einer erfindungsgemäßen Palette;

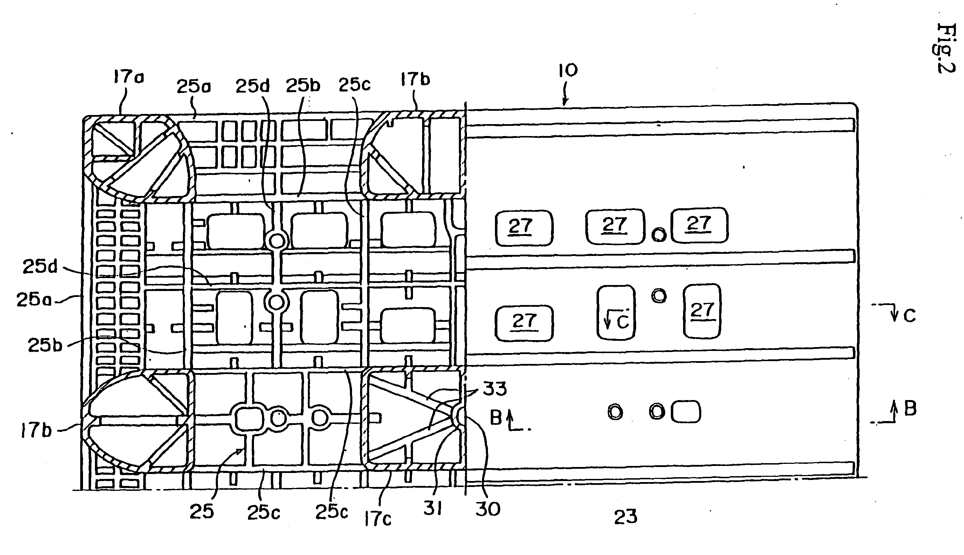

- Fig. 2: in der rechten Hälfte eine Draufsicht auf die Palette, und in der linken Hälfte einen Querschnitt längs der Linie A-A in Fig. 1;
- Fig. 3: einen Querschnitt längs der Linie B-B in Fig. 2;
- Fig. 4: einen Querschnitt längs der Linie C-C in Fig. 2; und
- Fig. 5: einen Querschnitt eines Hauptteils in einem Angußbereich.

### BEVORZUGTE AUSFÜHRUNGSFORM

Im folgenden wird eine ausführliche Beschreibung der Erfindung unter Bezugnahme auf die beigefügten Figuren gegeben.

Eine Kunststoffpalette 10 ist eine Vierwegepalette. Die Kunststoffpalette 10 wird ausgebildet durch Verschweißen zweier Teile, bei denen es sich um ein oberes Formelement 11 und ein unteres Formelement 13 handelt, die zuvor getrennt voneinander hergestellt worden sind. Das obere Formelemlent 11 besteht aus einer oberen Deckplatte 15 sowie Querstreben 17a bis 17c, und das untere Formelement 13 besteht aus einer unteren Deckplatte 19 und Querstreben 20a bis 20c, wobei die Palette hergestellt wird durch Aneinanderfügen der Endflächen der Querstreben 17 und der Querstreben 20 und Verschweißen derselben.

Die Querstreben 17a bis 17c sowie die Querstreben 20a bis 20c werden hergestellt aus einem Körper mit Hohlaufbau, und sie bestehen jeweils aus den Querstreben 17a und 20a an den vier Eckbereichen der Deckplatte, den Querstreben 17b und 20b in den Zwischenbereichen hiervon, sowie den Querstreben 17c und 20c in den mittigen Bereichen, die angebracht sind an einem Schnittpunkt von Diagonalen. Der Raum, welcher eingeschlossen ist von den Querstreben 17a bis 17b, den Querstreben 20a bis 20b, der oberen Deckplatte 15 und der unteren Deckplatte 19 ist als Gabeleinschubbereich 21 ausgebildet.

Als Kunststoff für die Kunststoffpalette kann man einen Polyolefinkunststoff wie zum Beispiel Polyethylen, Polypropylen oder ähnliches verwenden, und es ist möglich, ein oder zwei oder mehr geschäumte Materialien, wie leitende Füllmaterialien, Glasfasern, witterungsbeständige Chemikalien, Pigmente u.s.w., je nach Bedarf hinzuzufügen.

Bei dieser Erfindung kann die untere Deckplatte 19 denselben Aufbau aufweisen wie die obere Deckplatte 15, oder ein Bereich, welcher intern mit einem inneren Vorderendbereich der Querstrebe in Kontakt tritt, kann als offene Oberfläche ausgebildet sein. Dementsprechend kann der Aufbau der unten erläuterten Palette zumindest in der oberen Deckplatte 15 bereitgestellt sein. Die obere Deckplatte 15 besteht aus einer oberen Platte 23 und Verstärkungsrippen 25, welche vertikal und horizontal auf einer unteren Oberfläche der oberen Platte 23 ausgeführt sind. Die Gesamthöhe wird festgelegt durch die Höhe der Verstärkungsrippen 25.

Durchbohrungen 27 sind in einen Bereich der oberen Platte eingelassen, welcher von den Verstärkungsrippen 25 umschlossen wird.

Weiterhin sind bei den Verstärkungsrippen 25 die Verstärkungsrippen 25a und 25b vorgesehen, welche die Eckbereiche der vier Eckquerstreben 17a und die Eckbereiche der Zwischenquerstreben 17b verbinden, sowie eine Verstärkungsrippe 25c, welche die Eckbereiche der Zwischenquerstreben 17b und die Eckbereiche der mittigen Querstreben 17c verbindet, sowie eine Verstärkungsrippe 25d, welche ungefähr in der Mitte der jeweiligen Querstreben vorgesehen ist, und die so ausgebildet sind, daß sie eine relativ größere Dicke aufweisen als die anderen Verstärkungsrippen.

Ein Angußbereich 30 ist bereitgestellt in einem ungefähr mittigen Bereich der oberen Platte 23, und eine kreisförmige Rippe 31 ist bereitgestellt an einer unteren Oberfläche der oberen Platte 23, die dem Angußbereich 30 gegenüberliegt. Eine Verstärkungsrippe 33, die mit dem Eckbereich der mittigen Querstrebe 17c verbunden ist, ist an der kreisförmigen Rippe 31 vorgesehen.

Die oben erwähnte Verstärkungsrippe 33 dient auch als Angußkanalrippe, um den Fluß des Kunststoffs zu dem Zeitpunkt zu verbessern, zu dem der Einspritzvorgang stattfindet, und um für einen gleichmäßigen Fluß des Kunststoffs zu sorgen. Die kreisförmige Rippe 31 dient dazu, zu verhindern, daß die Verstärkungsrippen 33 einander direkt schneiden, wodurch die Schnittbereiche dick würden, sich die Abkühlzeit vergrößern würde und sich eine ungleichmäßige Schrumpfung einstellen würde.

Weiterhin wird, um eine gute Fließeigenschaft des Kunststoffes sicherzustellen, die Dicke N einer oberen Platte 23a innerhalb der kreisförmigen Rippe 31 dicker ausgebildet als eine Dicke N1 der anderen Bereiche in der oberen Platte. Der Fließwiderstand des Kunststoffes kann klein gemacht werden dadurch, daß die Dicke N der oberen Platte 23a groß ausgeführt wird, sowie durch Bereitstellung der Verstärkungsrippe 33. Wird, wie in dieser Ausführungsform, ein Einpunktangußsystem verwendet, so ist es insbesondere in dem Falle effizient, wo der innere Aufbau mit einer zweilagigen Struktur versehen ist, wie im folgenden beschrieben.

Zunächst sei eine Beschreibung des inneren Aufbaus der oberen Platte sowie der Verstärkungsrippe gegeben, welche den Merkmalen dieser Erfindung entsprechen.

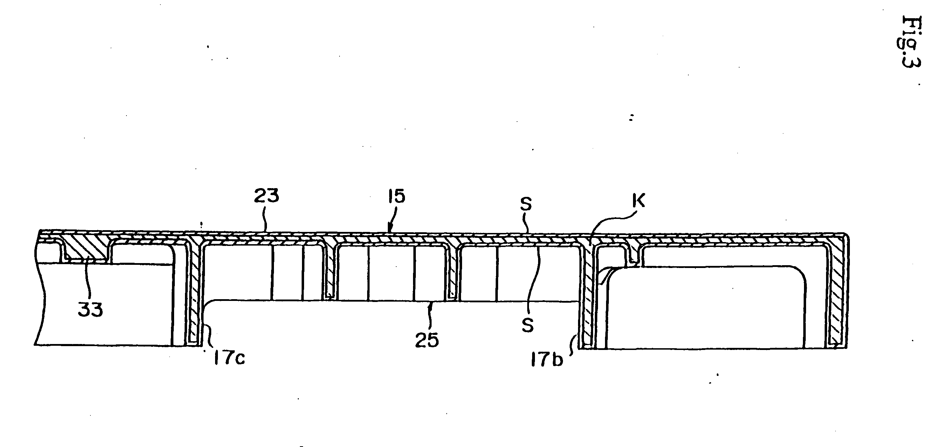

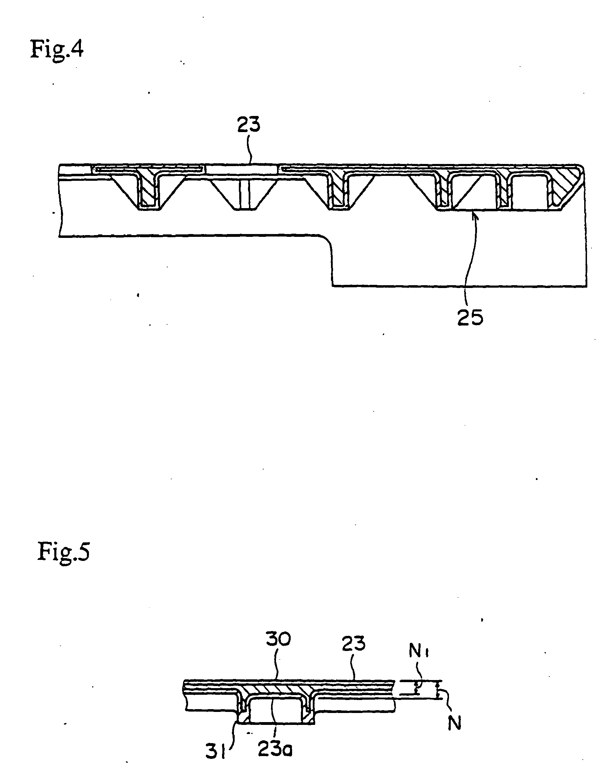

Die Figuren 3 und 4 sind Querschnitte, die Ausschnittsvergrößerungen eines Hauptteils zeigen. Die obere Platte 23 und die Verstärkungsrippe 25 haben einen zweilagigen Aufbau, der aus einer Außenhaut S besteht, die eine äußere Schicht bildet, sowie einer Kernschicht K, die eine innere Schicht bildet, und sind aus zwei verschiedenen Arten von Kunststoffen geformt. Beim Formen dieser Schichten wird zunächst der zweilagige Aufbau erhalten, welcher die Kernschicht K mittels der Außenhaut S bedeckt, und zwar dadurch, daß zunächst der Kunststoff, welcher die Außenhaut S bildet, in die Metallform eingespritzt wird, und dann der Kunststoff, welcher die Kernschicht K bildet, in die Metallform eingespritzt wird, und zwar kurz danach.

Wird der die Außenhaut S bildende Kunststoff eingespritzt sowie danach der die Kernschicht K bildende Kunststoff, so verfestigt sich der die Außenhaut bildende Kunststoff auf einer Wandoberfläche einer Kavität in der Metallform, und der die Kernschicht K bildende Kunststoff wird umschlossen, um so die Kernschicht zu bilden, während die Kunststoffe zwei Schichten bilden und fließen. Um das Problem zu lösen, daß die Kernschicht zur Außenhaut hinausläuft und die Kernschicht und die Außenhautschicht miteinander vermischt werden, werden die Menge des Kunststoffes, die Spritzgußbedingungen und ähnliches während des Einspritzvorgangs des Kunststoffs für die Kernschicht so kontrolliert, daß der Einspritzvorgang des Kunststoffes für die Kernschicht gerade beendet wird, bevor der Kunststoff, welcher vom Angußbereich eingespritzt wird, gegen das vordere Ende der Kavität trifft.

Es ist wünschenswert, daß der zweilagige Aufbau, der aus der Außenhautschicht und der Kernschicht K gebildet wird, in der gesamten Palette ausgebildet wird. Da jedoch die Außenhautschicht S in dem dünnen Bereich verfestigt wird, bevor die Kernschicht K gefüllt wird, ist es schwierig, die Kernschicht auszubilden. Da die Verstärkungsrippen 25a und 25b, die Verstärkungsrippe 25c und die Verstärkungsrippe 25d bei den Verstärkungsrippen 25 so ausgebildet sind, daß sie relativ dicker sind im Vergleich zu den anderen Verstärkungsrippen, ist es möglich, den zweilagigen Aufbau auszubilden, der durch die Außenhautschicht S und die Kernschicht K gebildet wird.

Die Kernschicht K kann eingestellt werden auf 10 bis 40 Gew.-%, obwohl es Unterschiede geben kann in Abhängigkeit vom Aufbau und der Größe der Verstärkungsrippe. Beträgt die Kernschicht weniger als 10 Gew.-%, so ist es unmöglich, eine Kostenersparnis auf Basis des Doppellagenaufbaus zu erzielen. In dem Falle, daß die Kernschicht mehr als 70 Gew.-% ausmacht, besteht ein Risiko, daß die Außenhautschicht aufbricht und die Kernschicht nach außen hin freiliegt, und daß die Außenhautschicht und die Kernschicht im Schweißnahtbereich miteinander vermischt werden. Für das in der Kernschicht K verwendete Material gibt es keine besonderen Einschränkungen. Es kann vielmehr beliebige Kunststoffe umfassen, soweit diese Kunststoffe mit der Außenhautschicht kompatibel sind. Zum Beispiel ist es möglich, verschiedene recycelte Kunststoffmaterialien aus Polyolefinkunststoffen zu verwenden. Weiterhin kann Kunststoff verwendet werden, der weder mit dem nicht geschäumten Kunststoff noch mit dem geschäumten Kunststoff in Verbindung steht. Falls ein geschäumter Kunststoff verwendet wird, ist es jedoch zu bevorzugen, daß eine Vergrößerung im geschäumten Zustand zwischen 1,05 und 1,5 liegt.

Weiterhin kann eine leichte Palette mit hoher Biegesteifigkeit hergestellt werden durch Formen der Kernschicht K aus einem Material mit einem hohen Elastizitätsbiegemodul, zum Beispiel einem Polyolefinkunststoffmaterial mit einem elastischen Biegemodul mit einem Wert zwischen 1000 MPa und 5000 MPa. Da die Kernschicht K in sandwichartiger Weise durch die Außenhautschicht S bedeckt ist, kann ein recyceltes Kunststoffmaterial für die Kernschicht K verwendet werden. Das recycelte Kunststoffmaterial kann ein Kunststoff sein, dem eine Drucktinte zugemischt ist, Pulver aus vulkanisiertem Gummi oder ähnliches oder ein Kunststoff, bei dem bei Füllstoff wie zum Beispiel Holzmehl, Papierpulver, andere Fasern, Calciumcarbonat oder ähnliches enthalten ist, solange wie der Kunststoff spritzgegossen werden kann.

Die Außenhautschicht S kann einen Kunststoff verwenden, welcher leitfähig ist, oder einen Kunststoff, welcher sowohl Witterungsbeständigkeit als auch Leitfähigkeit aufweist. Weiterhin kann die Außenschicht S Kunststoffe verwenden, unabhängig davon, ob es sich um nicht geschäumte oder geschäumte Kunststoffe handelt. In dem Fall, daß die Außenhautschicht aus einem nicht geschäumten Kunststoff hergestellt wird, ist es möglich, daß die äußere Oberfläche glatt ausgeführt wird, und es ist möglich, die Palette so herzustellen, daß sie nur schwerlich verschmutzt werden kann, und es ist möglich, Verschmutzungen leicht zu entfernen, selbst wenn die Palette verschmutzt worden ist.

Weiterhin gilt in Übereinstimmung mit dem zweilagigen Aufbau, der durch die Außenhautschicht und die Kernschicht gebildet wird, daß es möglich ist, die Menge an witterungsbeständigen Chemikalien zu reduzieren, an Pigmenten oder ähnlichem, und zwar durch Verbessern der Witterungsbeständigkeit mittels Verwendung einer gewünschten Farbe nur in der Außenhautschicht, so daß es möglich ist, eine Kostenreduzierung zu erzielen.

In diesem Fall ist die Verstärkungsrippe, die an der unteren Oberfläche der oberen Platte 23 angebracht ist, nicht beschränkt auf eine gitterförmige Rippe, welche parallel verläuft zur Endoberfläche der Palette, sondern kann auch aus einer Rippe gebildet sein, die an der Endoberfläche der Palette in einer schräg laufenden Richtung angebracht ist, oder aus einer Rippe besteht, welche diese Rippen kombiniert.

Weiterhin kann, um den Fluß des Kunststoffes vom Angußbereich 30 im mittigen Bereich hin zu den Querstreben an den vier Ecken zu verbessern, eine Angußkanalrippe vorgesehen sein, welche den Angußbereich 30 und die Querstrebe 17a verbindet. Weiterhin wude bei der oben erläuterten Ausführungsform die Beschreibung für eine Vierwegepalette gegeben, jedoch ist die Erfindung nicht auf eine Vierwegepalette beschränkt, sondern kann auch in geeigneter Form auf eine Zweiwegepalette angewendet werden.

Da die Kunststoffpalette gemäß der vorliegenden Erfindung so aufgebaut ist, daß der innere Aufbau als doppellagiger Aufbau ausgeführt ist, der aus der Außenhautschicht und der Kernschicht besteht, wird preiswertes recyceltes Kunststoffmaterial für die Kernschicht verwendet. Dementsprechend gilt in dem Fall, wo ein Material mit gewünschter Schönheit, Leitfähigkeit oder Witterungsbeständigkeit oder ähnlichem in der Außenhautschicht verwendet wird, daß es möglich ist, eine Kostenreduzierung zu erzielen, ohne daß die Einsatzeigenschaften der Kunststoffpalette verringert würden. Weiterhin ist es möglich, die gewünschte Farbe kontinuierlich einzuhalten durch Verwendung von Material der gewünschten Farbe für die Außenschicht, und Verwendung von recyceltem Kunststoffmaterial für die Kernschicht. Weiterhin gilt, da die Kernschicht recyceltes Kunststoffmaterial verwenden kann, welches hergestellt wird durch Mischen und Zermahlen von willkürlich vermischten recycelten Abfallprodukten, daß es möglich ist, auf effiziente Weise eine gute Verwendung von recyceltem Kunststoffmaterial durchzuführen.

Selbst bei der Palette mit dem doppellagigen Aufbau, der aus der Außenhautschicht und der Kernschicht besteht, wird es in dem Fall, daß die Palette spritzgegossen wird mittels des Einpunktangußsystems, der Schweißnahtbereich nur an den vier Eckbereichen der Deckplatte ausgebildet, so daß es möglich ist, eine ausreichende Menge von Kunststoff zur Kernschicht hinzuzuführen. Weiterhin kann in dem Fall, daß die Palette gemäß einem Einpunktangußsystem geformt wird, der geschmolzene Kunststoff, welcher die Außenhautschicht bildet, und der geschmolzene Kunststoff, welcher die Kernschicht bildet, zwei Schichten bilden, und sie können mit einer gleichförmigen Fließgeschwindigkeit fließen, so daß es möglich ist, die Außenhautschicht und die Kernschicht selbst in dem relativ dünnen Bereich auszuformen.

### GEWERBLICHE ANWENDBARKEIT

Wie oben erläutert, ist eine erfindungsgemäße Kunststoffpalette nützlich als Palette, die recyceltes Kunststoffmaterial verwendet, insbesondere als Palette, bei der die gewünschte Farbe auf der äußeren Oberfläche eingehalten wird.

## Patentansprüche

1. Kunststoffpalette (10) mit einer oberen Deckplatte (15) und einer unteren Deckplatte (19), die mittels Querstreben verbunden sind, wobei die Querstreben an vier Eckbereichen angeordnet sind (17a, 20a), in Zwischenbereichen hiervon (17b, 20b) und in einem ungefähr mittigen Bereich (17c, 20c), wobei die Querstreben einen Hohlaufbau aufweisen mit einem Lufteinschluß in einem inneren Bereich hiervon, wobei Verstärkungsrippen (25a, 25b, 25c, 25d) an der unteren Oberfläche einer Deckplatte vorgesehen sind, wobei eine äußere Wand von Querstreben und Verstärkungsrippen (25a, 26b) die Eckbereiche von vier Eckquerstreben (17a) und den Eckbereich der Zwischenquerstreben (17b) verbindet, wobei die Verstärkungsrippe (25c) die Eckbereiche der Zwischenquerstreben (17b) und die Eckbereiche der mittigen Querstreben (17c) verbindet, **dadurch gekennzeichnet, daß** die Verstärkungsrippen (25d) in der Mitte zwischen den jeweiligen Querstreben dicker sind als die anderen Verstärkungsrippen (25), eine Außenhautschicht (S), welche eine äußere Lage bildet, und eine Kernschicht (K), die eine innere Lage bildet, **dadurch** spritzgegossen werden, daß zunächst ein Kunststoff zur Bildung der Außenhautschicht in eine Metallform spritzgegossen wird von einem Einpunktangußbereich, der ungefähr in einem mittigen Bereich einer Deckplatte angebracht ist, und kurz danach in die Metallform ein Kunststoff mit einem hohen Elastizitätsbiegemodul eingespritzt wird zum Bilden der Kernschicht, und wobei die Kernschicht eingestellt wird auf 10 bis 70 Gew.-% der gesamten Palette und aus einem recycelten Kunststoffmaterial hergestellt ist.

2. Kunststoffpalette nach Anspruch 1, wobei eine kreisförmige Rippe (31) auf einer unteren Oberfläche bereitgestellt ist in einem ungefähr mittigen Bereich in einer oberen Platte, die den Angußbereich aufweist, und wobei die Dicke (N) der oberen Platte in einem Bereich innerhalb der kreisförmigen Rippe (31) dicker ausgebildet ist als in den anderen Bereichen, wobei die Außenhautschicht (S) und die Kernschicht (K) hergestellt sind aus einem Polyolefinkunststoffmaterial.

3. Kunststoffpalette nach Anspruch 1 oder 2, wobei die Kernschicht (K) aus einem mit einem Polyolefinharz kompatiblen Kunststoffmaterial hergestellt ist.

4. Kunststoffpalette nach Anspruch 1 oder 2, wobei die Außenhautschicht (S) aus einem Polyolefinkunststoffmaterial mit Leitfähigkeit hergestellt ist.

5. Kunststoffpalette nach Anspruch 1 oder 2, wobei die Kernschicht (K) aus einem Polyolefinkunststoffmaterial mit einem Elastizitätsbiegemodul mit einem Wert zwischen 1000 MPa und 5000 MPa hergestellt ist.

6. Kunststoffpalette nach Anspruch 1 oder 2, wobei die Außenhautschicht (S) aus einem Polyolefinkunststoffmaterial mit Leitfähigkeit hergestellt ist und die Kernschicht (K) aus einem Polyolefinkunststoffmaterial mit einem Elastizitätsbiegemodul mit einem Wert zwischen 1000 MPa und 5000 MPa hergestellt ist.

7. Kunststoffpalette nach Anspruch 1 oder 2, wobei die Außenhautschicht (S) aus einem nicht geschäumten Körper hergestellt ist und die Kernschicht (K) aus einem geschäumten Körper hergestellt ist, der im geschäumten Zustand eine Vergrößerung zwischen 1,05 und 1,5 zeigt.

8. Kunststoffpalette nach Anspruch 1 oder 2, wobei die Außenhautschicht (S) aus einem nicht geschäumten Körper hergestellt ist, der aus einem Polyolefinkunststoffmaterial mit Leitfähigkeit hergestellt ist, und wobei die Kernschicht (K) aus einem geschäumten Körper hergestellt ist, der im geschäumten Zustand eine Vergrößerung zwischen 1,05 und 1,5 zeigt.

9. Kunststoffpalette nach Anspruch 1 oder 2, wobei die Außenhautschicht (S) als nicht geschäumter Körper ausgeführt ist, und wobei die Kernschicht (K) aus einem Polyolefinkunststoffmaterial mit einem Elastizitätsbiegemodul mit einem Wert zwischen 1000 MPa und 5000 MPa hergestellt ist, und als geschäumter Körper ausgeführt ist, der im geschäumten Zustand eine Vergrößerung zwischen 1,05 und 1,5 zeigt.

10. Kunststoffpalette nach Anspruch 1 oder 2, wobei die Außenhautschicht (S) als nicht geschäumter Körper aus einem Polyolefinkunststoffmaterial mit Leitfähigkeit hergestellt ist, und wobei die Kernschicht (K) aus einem Polyolefinkunststoffinaterial mit einem Elastizitätsbiegemodul mit einem Wert zwischen 1000 MPa und 5000 MPa hergestellt ist, und als geschäumter Körper ausgeführt ist, der im geschäumten Zustand eine Vergrößerung zwischen 1,05 und 1,5 zeigt.

11. Kunststoffpalette nach einem der Ansprüche 1 bis 4, wobei eine kreisförmige Rippe (31) auf einer unteren Oberfläche in einem ungefähr mittigen Bereich in einer oberen Platte mit dem Angußbereich ausgebildet ist, wobei die Dicke (N) der oberen Platte im Bereich innerhalb der kreisförmigen Rippe (31) dicker ausgeführt ist als die anderen Bereiche, und wobei die Außenhautschicht (S) ausgeformt ist aus einem Polyolefmkunststoffmaterial mit Witterungsbeständigkeit, und wobei die Kernschicht (K) aus einem Polyolefinkunststoffmaterial mit einem Elastizitätsbiegemodul mit einem Wert zwischen 1000 MPa und 5000 MPa hergestellt ist.

## Claims

1. A synthetic resin pallet (10) having an upper deck board (15) and a lower deck board (19) connected to each other via cross beams, wherein said cross beams are arranged in four corner portions (17a, 20a), intermediate portions (17b, 20b), and an approximately center portion (17c, 20c) of the deck board, wherein said cross beams have a hollow structure provided with an air gap in an inner portion thereof, reinforcing ribs (25a, 25b, 25c, 25d) are provided in a lower surface of the deck board, a peripheral wall of said cross beams and the reinforcing rib (25a, 25b) connecting the corner portions of the cross beams (17a) in the four corner portions and the corner portion of the cross beams (17b) in the intermediate portions, the reinforcing rib (25c) connecting the corner portions of the cross beams (17b) in the intermediate portions and the corner portions of the cross beams (17c) in the center portions, **characterized in that** the reinforcing ribs (25d) arranged in the center portion between the respective cross beams are thicker than the other ribs (25), and a resin for forming a skin layer (S) is first injected into a metal mold from one point gate portion provided approximately in a center portion of the deck board, and slightly thereafter a resin having a high elastic modulus in bending for forming the core layer (K) is injected into the metal mold therefrom, so that the skin layer forming an surficial layer and the score layer forming an inner layer are molded, said core layer being set to 10 to 70 weight% of the total of the pallet due to reclaimed plastic materials.

2. A synthetic resin pallet as claimed in claim 1, wherein a circular rib (31) is provided on a lower surface of an approximately center portion in a top plate having the gate portion, a thickness of the top plate (N) in a range within said circular rib is formed thicker than the other portions, the skin layer (S) and the core layer (K) are molded by a polyolefine resin material.

3. A synthetic resin pallet as claimed in claim 1 or 2, wherein the core layer (K) is molded by a resin material compatible with a polyolefine resin.

4. A synthetic resin pallet as claimed in claim 1 or 2, wherein the skin layer (S) is molded by a polyolefine resin material having a conductivity.

5. A synthetic resin pallet as claimed in claim 1 or 2, wherein the core layer (K) is molded by a polyolefine resin material having an elastic modulus in bending of a value between 1000 MPa and 5000 MPa.

6. A synthetic resin pallet as claimed in claim 1 or 2, wherein the skin layer (S) is molded by a polyolefine resin material having a conductivity, and the core layer (K) is molded by a polyolefine resin material having an elastic modulus in bending of a value between 1000 MPa and 5000 MPa.

7. A synthetic resin pallet as claimed in claim 1 or 2, wherein the skin layer (S) is formed as a non-foamed body, and the core layer (K) is formed as a foamed body having a foam magnification between 1.05 und 1.5.

8. A synthetic resin pallet as claimed in claim 1 or 2, wherein the skin layer (S) is formed as a non-foamed body molded by a polyolefine resin material having a conductivity, and the core layer (K) is formed as a foamed body having a foam magnification between 1.05 and 1.5.

9. A synthetic resin pallet as claimed in claim 1 or 2, wherein the skin layer (S) is formed as a non-foamed body, and the core layer is molded by a polyolefine resin material having an elastic modulus in bending of a value between 1000 MPa and 5000 MPy and is formed as a foamed body having a foam magnification between 1.05 and 1.5.

10. A synthetic resin pallet as claimed in claim 1 or 2, wherein the skin layer is formed as a non-foamed body molded by a polyolefine resin material having a conductivity, and the core layer (K) is molded by a polyolefine resin material having an elastics modulus in bending of a value between 1000 MPa and 5000 MPa and is formed as a foamed body having a foam magnification between 1.05 and 1.5.

11. A synthetic resin pallet as claimed in any one of claims 1 to 4, wherein a circular rib (31) is provided on a lower surface of an approximately center portion in a top plate having the gate portion, a thickness (N) of the top plate in a range within said circular rib is formed thicker than the other portions, the skin layer (S) is molded by a polyolefine resin material having a weather resistance, and the core layer (K) is molded by a polyolefine resin material having an elastic modulus in bending of a value between 1000 MPa and 5000 MPa.

## Revendications

1. Palette en plastique (10) présentant une plaque de couverture supérieure (15) et une plaque de couverture inférieure (19), qui sont reliées par des entretoises, les entretoises étant disposées en quatre zones de coin (17a, 20a), dans des zones intermédiaires de celles-ci (17b, 20b) et à peu près dans une zone médiane (17c, 20c), les entretoises présentant une structure creuse renfermant de l'air dans une zone intérieure de celle-ci, des nervures de renfort (25a, 25b, 25c, 25d) étant prévues à la surface inférieure d'une plaque de couverture, une paroi extérieure d'entretoises et de nervures de renfort (25a, 26b) reliant les zones de coin de quatre entretoises de coin (17a) et la zone de coin des entretoises intermédiaires (17b), la nervure de renfort (25c) reliant les zones de coin des entretoises intermédiaires (17b) et les zones de coin des entretoises médianes (17c), **caractérisée en ce que** les nervures de renfort (25d) sont plus épaisses au milieu entre les entretoises que les autres nervures de renfort (25), une couche d'enveloppe extérieure (S) qui forme une couche extérieure et une couche de noyau (K) qui forme une couche intérieure sont coulées par injection de manière à ce qu'un plastique pour former la couche d'enveloppe extérieure est d'abord coulé par injection dans un moule de métal à partir d'une zone d'entrée à un point qui se trouve environ dans une zone médiane d'une plaque de couverture, et que peu de temps après, un plastique ayant un module d'élasticité en flexion élevé est injecté dans le moule de métal pour former la couche de noyau, la couche de noyau étant réglée à 10 à 70 % en poids de l'ensemble de la palette et fabriquée à partir d'une matière plastique recyclée.

2. Palette en plastique selon la revendication 1, une nervure en forme de cercle (31) étant prévue sur une surface inférieure à peu près dans une zone médiane dans une plaque supérieure qui présente la zone d'entrée, et l'épaisseur (N) de la plaque supérieure étant exécutée plus épaisse dans une zone à l'intérieur de la nervure en forme de cercle (31) que dans les autres zones, la couche d'enveloppe extérieure (S) et la couche de noyau (K) étant fabriquées en une matière plastique polyoléfine.

3. Palette en plastique selon les revendications 1 ou 2, la couche de noyau (K) étant fabriquée dans une résine polyoléfine compatible avec la matière plastique.

4. Palette en plastique selon les revendications 1 ou 2, la couche d'enveloppe extérieure (S) étant fabriquée en une matière plastique polyoléfine ayant des qualités de conductivité.

5. Palette en plastique selon les revendications 1 ou 2, la couche de noyau (K) étant fabriquée dans une matière plastique polyoléfine ayant un module d'élasticité en flexion présentant une valeur entre 1000 MPa et 5000 MPa.

6. Palette en plastique selon les revendications 1 ou 2, la couche d'enveloppe extérieure (S) étant fabriquée en une matière plastique polyoléfine ayant des qualités de conductivité et la couche de noyau (K) étant fabriquée en une matière plastique polyoléfine ayant un module d'élasticité en flexion présentant une valeur entre 1000 MPa et 5000 MPa.

7. Palette en plastique selon les revendications 1 ou 2, la couche d'enveloppe extérieure (S) étant fabriquée en un corps non moussé et la couche de noyau (K) étant fabriquée dans un corps moussé, qui dans l'état moussé présente un agrandissement entre 1,05 et 1,5.

8. Palette en plastique selon les revendications 1 ou 2, la couche d'enveloppe extérieure (S) étant fabriquée en un corps non moussé qui est fabriqué en une matière plastique polyoléfine ayant des qualités de conductivité, et la couche de noyau (K) étant fabriquée en un corps moussé qui à l'état moussé présente un agrandissement entre 1,05 et 1,5.

9. Palette en plastique selon les revendications 1 ou 2, la couche d'enveloppe extérieure (S) étant réalisée comme corps non moussé, et la couche de noyau (K) étant fabriquée en une matière plastique polyoléfine ayant un module d'élasticité en flexion d'une valeur entre 1000 MPa et 5000 MPa, et étant réalisée comme corps moussé qui à l'état moussé présente un agrandissement entre 1,05 et 1,5.

10. Palette en plastique selon les revendications 1 ou 2, la couche d'enveloppe extérieure (S) étant fabriquée en tant que corps non moussé en matière plastique polyoléfine ayant des qualités de conductivité, et la couche de noyau (K) étant fabriquée en une matière plastique polyoléfine ayant un module d'élasticité en flexion d'une valeur entre 1000 MPa et 5000 MPa, et étant réalisée comme corps moussé qui à l'état moussé présente un agrandissement entre 1,05 et 1,5.

11. Palette en plastique selon l'une quelconque des revendications 1 à 4, la nervure en forme de cercle (31) étant formée sur une surface inférieure dans une zone approximativement médiane dans une plaque supérieure présentant la zone d'entrée, l'épaisseur (N) de la plaque supérieure dans la zone à l'intérieur de la nervure en forme de cercle (31) étant exécutée plus épaisse que les autres zones, et la couche d'enveloppe extérieure (S) étant moulée dans une matière plastique polyoléfine présentant une résistance aux intempéries, et la couche de noyau (K) étant fabriquée en une matière plastique polyoléfine ayant un module d'élasticité en flexion d'une valeur entre 1000 MPa et 5000 MPa.
